# EUROPEAN PATENT APPLICATION

(11) **EP 3 151 168 A1**
(43) Date of publication of application: **05.04.2017**
(21) Application number: 15460087.8
(22) Date of filing: 30.09.2015
(51) Int. Cl.: G06K 19/18

(54) **SECURITY FEATURE AGAINST FORGERY, IN PARTICULAR FOR HIGH-VALUE PRODUCTS, PRODUCT AUTHENTICATION METHOD AND PRODUCT AUTHENTICATION SYSTEM**

(71) Applicant: Nawrocki, Piotr, 88-100 Inowroclaw (PL)
(72) Inventor: Nawrocki, Piotr, 88-100 Inowroclaw (PL)
(74) Representative: Sielewiesiuk, Jakub

(57) **Abstract**

The present invention is a security feature (1) against counterfeiting, in particular for high-value products, comprising a graphic code (2) disposed on a graphene nanocomposite material layer, said graphene nanocomposite material layer comprises at least one layer of graphene (G-DG) disposed on an adhesive layer (P), preferably a polymer.

The invention also includes system and method for authenticating a product using such a feature.

## Description

The invention relates to a security feature against counterfeiting, in particular for high-value products, and a method of authenticating a product using such an element and a product authentication system.

Counterfeiting of products such as food, cosmetics and drugs is widespread globally and can be dangerous to life and health of consumers. The dynamic economic development and rising living standards result in increasing interest in branded products, which is used by counterfeiters who see counterfeiting as the possibility to generate large revenues. It is estimated that approximately 9% of all world trade is in counterfeit articles. The market value of counterfeit goods in 2008 amounted to 250 billion US dollars, while one of the main product groups with the largest upward trend in the number of counterfeit products were medicines, cosmetics and wine and spirits. One of the main factors facilitating counterfeiting is the growing globalisation of markets and ultimately limiting the availability of information to allow for effective identification of counterfeit products and to trace their supply chains. Another very important factor is the limited availability of information about the currently used method for securing products and the relatively high costs of using such security. The main problem is the lack of direct cooperation between producers, who alone are able to create effective and recognised by consumers methods of protecting their products.

Questions of the security of goods on the market, so also ensuring their authenticity, is illustrated by the following figures:
- estimated market value of counterfeit products in 2015 is 960 billion USD
- annually 3 000 people die in G20 group due to the use of counterfeit products
- G20 annual losses resulting from loss of tax revenue caused by placing counterfeit products on the market is 77.5 billion USD.

This problem was also highlighted by the European Commission, which in its Communication "European Consumer Agenda - Increased Confidence and Growth", set out a strategic vision for consumer policy in 2014. The Consumer Agenda draws attention to the following elements: strengthening consumer safety, raising awareness about consumer rights, enforcement and legal security and equalising the rights of consumers. The security problem is known mainly in sectors like FMCG, cosmetics, pharmaceuticals and others.

Product Authentication is the process of verifying the identity of the product declared. It is to identify and then verify the identity of the product. Authentication and authorisation are related ideas, but closely bound with issues related to cryptography - ISO/IEC CD 9798-1 standard. The very process of verifying the authenticity of products includes, in principle, a n umber of operations, from the evaluation of the supplier's reliability, through, for example, a simple verification of the visual characteristics of the product (quality of packaging, label, marking, etc.) to the verification of additional security features (such as holograms, etc.).

The aim of the invention is to provide a security feature against counterfeiting, in particular for high-value products, and a method of authenticating a product using such an element and a product authentication system.

The invention relates to a security feature against forgery, in particular for high-value products, comprising a graphic code, placed on a nanocomposite graphene material layer, said nanocomposite graphene material layer comprises at least one graphene layer disposed on an adhesive layer, preferably a polymer.

Preferably, the graphical code is a QR code (*Quick Response*) or a barcode.

Preferably graphene in the graphene layer is present in pure or doped form.

Preferably it comprises a layer of graphene, and two adhesive layers, wherein the graphene layer is located directly between the two layers of adhesive.

Preferably, the graphene is in a two-dimensional form having a thickness of one atom or more than one atom, preferably in the form of quantum dots (GQDs, Graphene Quantum Dots) (i.e. graphene nanoparticles with a diameter from 0.5 nm to 60 nm, preferably 1 nm to 11 nm, containing from 1 to 90, preferably from 1 to 20 layers of graphene) or three-dimensional, preferably in the form of nanotubes arranged in different directions.

Preferably, the adhesive layer is a transparent or opaque or holographic layer.

Preferably, the nanocomposite graphene layer material is an elastic layer.

The invention includes a method of authenticating a product comprising the step of reading the security feature according to the invention placed on the product.

Preferably, the method of product authentication includes reading a graphic code and detection of graphene in the security feature.

Preferably, the graphene detection is carried out by means of spectroscopic measurements, preferably measuring the transmission and/or reflection of light and/or Raman radiation measurement.

The invention also relates to a product authentication system, comprising:
- the security feature according to the invention,
- a device designed to read graphics code, and
- a detector adapted to detect the graphene in the security feature.

Preferably, the device adapted to read the graphic code is also a detector adapted to detect graphene.

Preferably, the device designed for reading a graphic code and/or the detector is adapted to detect the graphene is a smartphone.

The presence of the graphene structure in security feature is an additional factor protecting against counterfeiting, as commercial production of graphene in the form of a single structure is not yet available to potential counterfeiters.

### Preferred embodiments

The invention will now be further described in the preferred embodiments, with reference to the accompanying drawings, in which:
- Fig. 1: presents the security feature according to the invention,
- Fig. 2: shows an example of the use of the security feature on the packaging of a high-value product,
- Fig. 3: shows a layer of the nanocomposite material of the security feature on the example of two-dimensional graphene,
- Fig. 4: shows examples of the graphene structures in the security feature,
- Fig. 5: shows the product authentication method using a visible QR code,
- Fig. 6: shows the product authentication method using a transparent QR code,
- Fig. 7: shows a network functionality of the product authentication system.

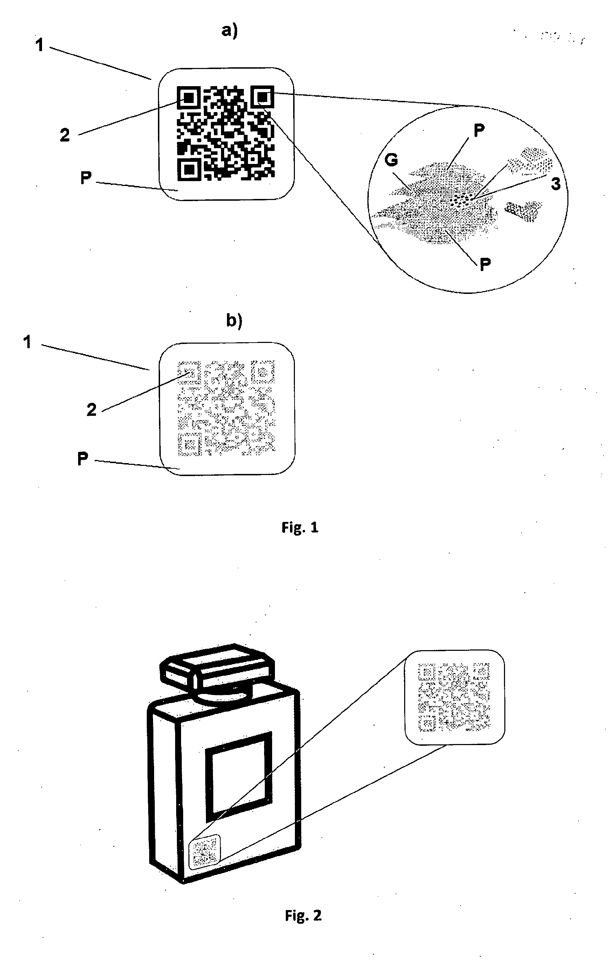

Fig. 1 illustrates a security feature (1) against forgery, which comprises a QR code (2) visible (Fig. 1a) or transparent (Fig. 1b) disposed on the graphene nanocomposite material layer. The graphene nanocomposite material layer comprising a layer of graphene (G) containing graphene (3) and arranged on the polymer layer (P). QR code (2) is made depending on the method of its implementation, on a substrate (P) transparent or opaque. It is part of visual verification of the system.

Depending on the chosen method of detection, a graphene QR code (2) on the holographic medium may be used as a visual verification element, which allows an increase in the difficulties of conterfeiting.

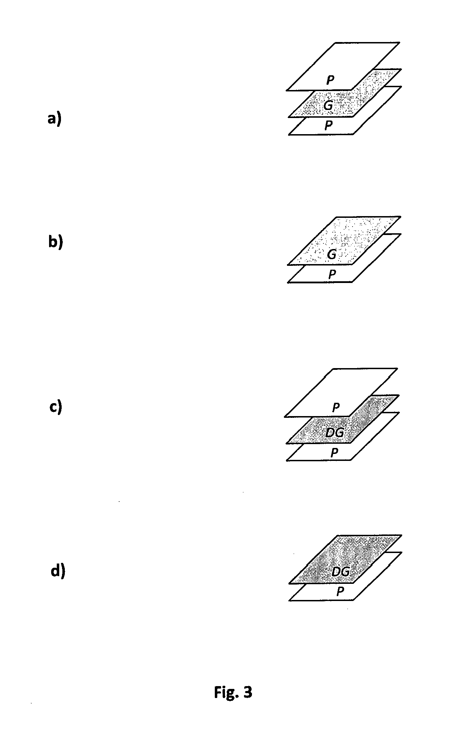

The components of the nanocomposite layer can be made in one of the selected ways illustrated in Fig. 3:
a) the layer of graphene (G), two-dimensional or of 3D structure, e.g. nanotubes between two layers of polymer (P) transparent or opaque, or in the form of graphene quantum dots (GQDs);
b) the layer of graphene (G), two-dimensional or of 3D structure, e.g. nanotubes "embedded" on the surface of a single layer of polymer (P) transparent or opaque, or in the form of graphene quantum dots (GQDs);
c) a doped layer of graphene (DG), two-dimensional or of 3D structure, e.g. nanotubes between two layers of polymer (P) transparent or opaque, or in the form of graphene quantum dots (GQDs);
d)
e) a doped layer of graphene (DG), two-dimensional or of 3D structure, e.g. nanotubes "embedded" on the surface of a single layer of polymer (P) transparent or opaque, or in the form of graphene quantum dots (GQDs);

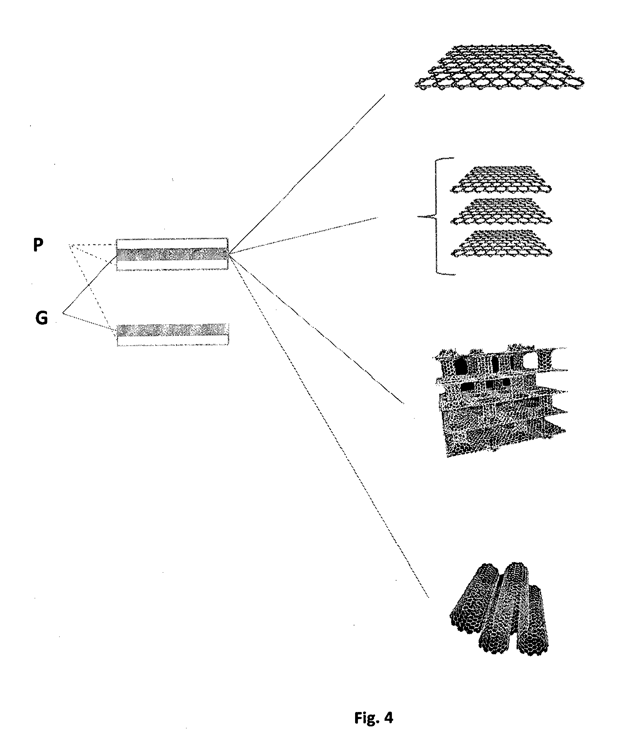

Depending on the design, the arrangement of graphene (3) nanocomposite structure can take any form that can achieve maximum performance of the security feature (1) during its use. Graphene (3) in the layer of graphene (G, DG) may be present in a two-dimensional form having a thickness of one atom or more than one atom, preferably in the form of quantum dots (GQDs) or three-dimensional, preferably in the form of nanotubes arranged in different directions (Fig. 4).

The method of product authentication according to the invention includes reading a graphic code (2) and detection of graphene (3) in the security feature. The graphene (3) detection is carried out by means of spectroscopic measurements, preferably measuring the transmission and/or reflection of light and/or Raman radiation measurement.

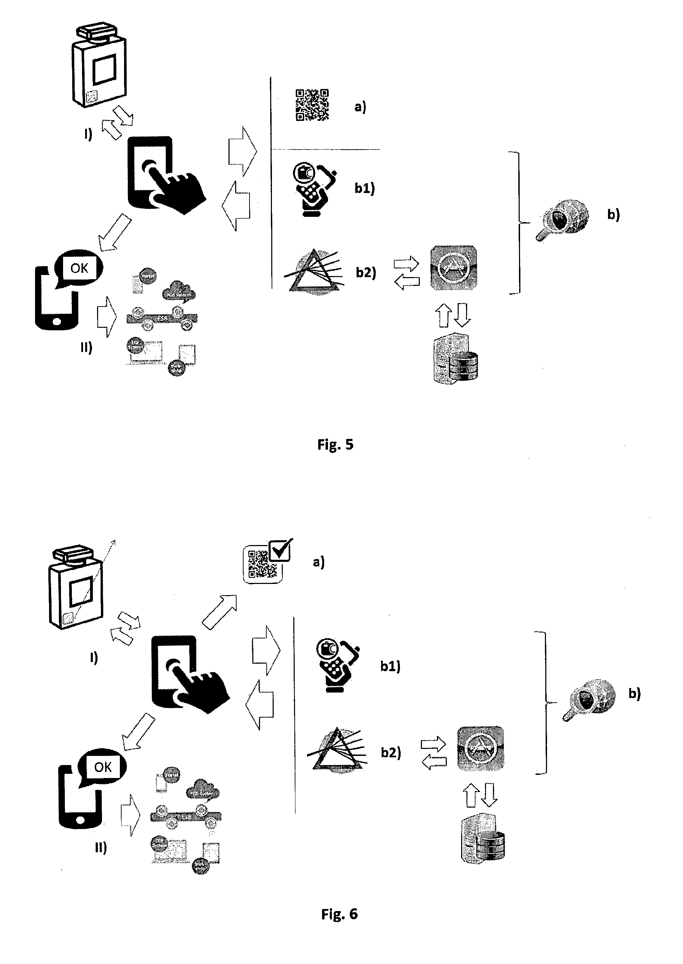

A method and system for authenticating products using the visible QR code illustrated in Fig. 5- The security feature (1) with a visible QR code (2) and graphene (3) is arranged on the product. Authentication of the product (Fig. 5, I) is performed by reading the visible QR (2) code (Fig. 5 a), and measuring the presence of graphene (3) in the security feature (1) (Fig. 5, b). A device adapted to read the graphic code, while being a detector adapted to detect the graphene (3) is a smartphone. Reading a visible code, OR (Fig. 5, a) is carried out by a smartphone application. Detection of graphene (Fig. 5, b) is performed by measuring the transmission or reflection of light by smartphone instrumentation (spectrophotometry) (Fig. 5, b1) and/or by measuring the Raman radiation through a smartphone application (Fig. 5, b2). The measurement result is analysed on-line. In case of positive verification of the QR code and the presence of graphene, a smartphone generates a message confirming the authenticity of the product and activates additional services, e.g. the purchase (Fig. 5, II).

A method and system for authenticating products using the transparent QR code illustrated in Fig. 6. Authentication of the product (Fig. 6, I) is performed similarly to the one with visible code, but in the case of transparent code reading the code is preceded by transforming a transparent QR code by a smartphone application in the code data (by spectrophotometric analysis). Starting the application on a smartphone, or a dedicated detection device, and bringing it close to the item (1) containing a QR code (2) and graphene (3), starts the process of identifying both indicators (verification of the presence of graphene, and the QR code data). Authentication in the above process allows for the effect of being able to make any activities/services: authentication in the control system, purchasing online through a dedicated function, notifying of product counterfeiting, etc.

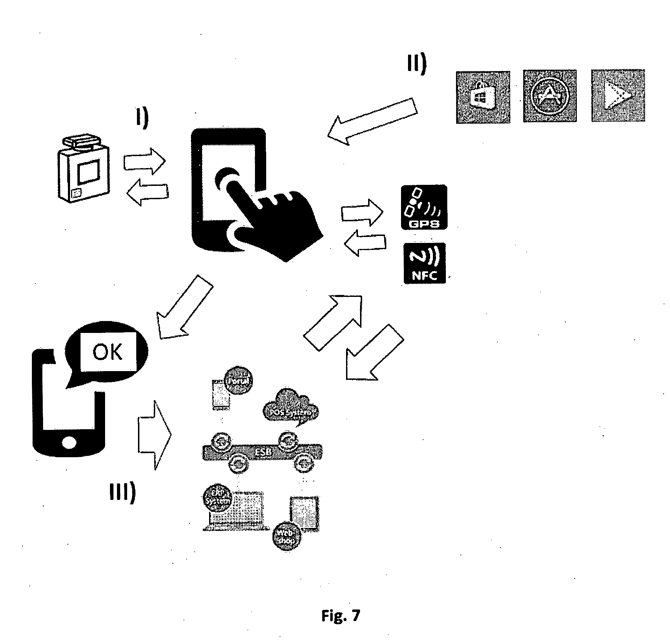

Network functionalities of the product authentication system are illustrated in Fig. 7. Product authentication system may offer features such as:
- Access to application download using the QR code (Fig. 7, II).
- Access to combined public information and optional modules, such as a price search engines, based on NFC and QR code
- Authentication based on authentication elements (Fig. 7, I, II)
- Sending information about scanning with optional location
- Sharing associated information and metadata
- Registration of location based on the GPS, NFC, QR code
- Notification of unauthorised copies
- Work offline/online
- Audit rights owner mode
- Providing information about the product by social networking sites (eg. Facebook ,Twitter)
- Downloading additional applications and access to authorised resources on the basis of NFC tag verification

In the system illustrated in the embodiment a combination of authentication products was employed through applications and material authentication (application of graphene or its dopes), a hologram, as well as contact and communication technology including: NFC technology (Near Field Communication) - used in supplementary operations, for example: on-line payments, modular, permanent dimension QR code - for encrypted product identification, GPS (Global Positioning System) - to automatically search for the location of the controlled product. Identification of biometric characteristics: a photograph of the holder, a fingerprint, an eyeball scan, etc. allow official control unit, or institutions which checks are ordered to confirm the identification of the identity in the process.

The advantage of the product authentication method and system according to this example is the use and combination of technologies including spectroscopic technique of Raman radiation measurement, i.e. inelastic scattering of photons, spectrophotometry involving the quantitative measurement of transmission or reflectance, the Web, NFC, and the product location mechanism - GPS tagging. This gives the possibility of a full authentication, creating in effect a mobile tool to protect copyrights and industrial laws and legality of the product. For secure data transmission and application and information authentication secure encryption algorithms are used. At the time of downloading the purchased application an encryption code is programmed in it, which at the time of the product control will serve as an authenticity identifier of the read data. The system uses mechanisms with a high degree of control encryption during the whole process of data exchange between the application and the system, and during the transmission and storage of classified information.

In order to verify a product location, the system uses location-based services, GPS, by determining and entering the location in the system to process the data which allows for preparation of a map of distribution of the products and for other statistical purposes.

The unique application interface for control authorities is specially designed for exchange of information from the mobile application between the system and external databases.

Only the QR code read from the device that made the detection of graphene will be authorised, and/or the purchase will be possible.

The technology includes a method of communication and system infrastructure, which commercial solution allowing for detection and identification of the product is based on. With the implementation it will form an integral part of the integrity and business ethics system and a gradually developed sales and information platform.

Depending on the severity of holographic technology, certificates or other off-line information can be put on them, which will enable confirmation of product online, and conditionally without information on possible revocation of the certificate.

## Claims

1. Security feature (1) against counterfeiting, in particular for high-value products, **characterised in that** it comprises a graphic code (2) disposed on a graphene nanocomposite material layer, said graphene nanocomposite material layer comprises at least one layer of graphene (G-DG) disposed on an adhesive layer (P), preferably a polymer.

2. The security feature according to claim 1, **characterised in that** the graphic code (2) is a QR code or a barcode.

3. The security feature according to claim 1 or 2, **characterised in that** the graphene (3) in a layer of graphene (G-DG) is present in pure (G) or doped (DG) form.

4. The security feature according to claim 1 or 2 or 3, **characterised in that** it comprises a layer of graphene (G, DG) and two layers of adhesive (P), said graphene layer (G, DG) is located directly between the two layers of adhesive (P).

5. The security feature according to any one of the preceding claims, **characterised in that** the graphene (3) in the is present in a two-dimensional form having a thickness of one atom or more than one atom, preferably in the form of quantum dots (GQDs) or three-dimensional, preferably in the form of nanotubes arranged in different directions.

6. The security feature according to any one of the preceding claims, **characterised in that** the adhesive layer (P) is a transparent or opaque or holographic layer.

7. The security feature according to any one of the preceding claims, **characterised in that** the nanocomposite graphene material layer is an elastic layer.

8. A method of authentication of the product, **characterised in that** it comprises the step of reading the security feature (1) according to any one of the preceding claims, placed on the product.

9. The product authentication according to claim 8, **characterised in that** it includes reading a graphic code (2) and the detection of graphene (3) in the security feature.

10. The product authentication system according to claim 9, **characterised in that** the detection of graphene (3) detection is carried out by means of spectroscopic measurements, preferably measuring the transmission and/or reflection of light and/or Raman radiation measurement.

11. The product authentication system, **characterised in that** it comprises:
- a security feature (1) according to any one of claims 1 to 7,
- a device designed to read graphics code (2), and
- a detector adapted to detect the graphene (3) in the security feature (1).

12. The system of claim 11, **characterised in that** the device adapted to read the graphic code (2) is also a detector adapted to detect graphene (3).

13. The system of claim 11 or 12, **characterised in that** the device designed for reading a graphic code and/or the detector is adapted to detect the graphene (3) is a smartphone.
